(19) Europäisches Patentamt
European Patent Office
Office européen des brevets

(11) Numéro de publication: **0 001 731**
**B1**

(12) # FASCICULE DE BREVET EUROPEEN

(21) Numéro de dépôt: **78400131.5**

(22) Date de dépôt: **10.10.78**

(51) Int. Cl.[3]: C 09 B 29/08, C 09 B 43/00, D 06 P 1/41, D 06 P 3/24, D 06 P 3/52, D 06 P 3/70, C 07 D 231/00

(54) **Colorants azo-pyrazolium, leur préparation, leur application et fibres colorées à l'aide de ces colorants**

(30) Priorité: **21.10.77 FR 7731712**

(43) Date de publication de la demande:
**02.05.79 Bulletin 79/09**

(45) Mention de la délivrance du brevet:
**23.07.80 Bulletin 80/15**

(84) Etats contractants désignés:
**BE CH DE FR GB NL**

(56) Documents cités:
**FR - A - 1 392 581**
**FR - A - 2 152 385**
**FR - A - 2 172 839**
**FR - A - 2 184 023**
**FR - A - 2 240 269**

(73) Titulaire: **PCUK Produits Chimiques Ugine Kuhlmann Service Propriété Industrielle Tour Manhattan**
**F - 92087 Paris La Defense 2 Cédex 21 (FR)**

(74) Mandataire: **Leboulenger, Jean**
**11 rue Schweitzer**
**F - 76240 Le Mesnil Esnard**
**(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 001 731 B1

Colorants azo-pyrazolium, leur préparation leur application et fibres colorées à l'aide de ces colorants

La présente invention concerne de nouveaux colorants azo-pyrazolium, utilisables pour la coloration des fibres à base de polymères ou de coplymères d'acrylonitrile et des autres fibres modifiées pour être teignables avec des colorants basiques.

La demande des utilisateurs est de plus en plus forte pour des colorants d'indice de compatibilité moyen. L'indice de compatibilité qui est défini dans la revue J.S.D.C. de Février 1971 est une mesure qui caractérise l'associabilité d'un colorant en combinaison, quelque soit le procédé de teinture utilisé; des colorants d'indice de compatibilité égal présentent, lorsqu'ils sont utilisés en combinaison, une montée dans le ton de la nuance finale.

Dans les brevets français 2 240 269 et 2 152 385 on a décrit des colorants azo-pyrazolium qui teignent les fibres précitées en nuances rouges vives et pures. Cependant, ces colorants ont généralement un faible indice de compatibilité ou ne sont pas toujours suffisamment stables dans les bains de teinture.

Il a maintenant été trouvé dans les services de la demanderesse une nouvelle série de colorants azo-pyrazolium qui fournissent sur les fibres précitées des colorations rouges de nuance franche, douées d'excellentes solidités (lumière, vaporisage, lavage). Ces colorants qui ont des indices de compatibilité moyens et sont stables dans les bains de teinture, répondent à la formule générale:

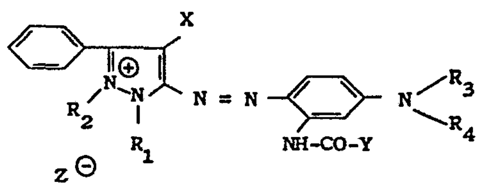
(I)

dans laquelle $R_1$ et $R_2$ représentent des groupes alkyle contenant 1 à 4 atomes de carbone, de préférence des groupes méthyle ou éthyle, $R_3$ représente un atome d'hydrogène ou un groupe méthyle ou éthyle, $R_4$ représente un groupe méthyle ou éthyle, X représente un atome d'hydrogène ou un groupe nitro, Y représente un groupe phényle éventuellement substitué par un ou deux atomes d'halogène (Cl, Br, I ou F) ou groupes nitro, et $Z^{\ominus}$ représente un anion.

Les colorants de formule (I) peuvent être préparés par traitement des composés de formule:

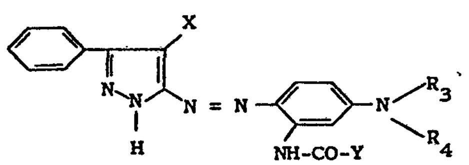
(II)

dans laquelle X, Y, $R_3$ et $R_4$ ont les mêmes significations que ci-dessus, au moyen d'agents alkylants suivant des procédés connus en soi.

On peut effectuer le traitement alkylant dans un excès de l'agent alkylant ou dans un solvant organique tel que les hydrocarbures benzéniques et leurs dérivés chlorés, le diméthylformamide ou le chloroforme. Comme agents alkylants, on peut utiliser par exemple les halogénures d'alkyle, les arylsulfonates d'alkyle et les sulfates de dialkyle, en particulier les sels de méthyle ou d'éthyle.

Les composés de formule (II) peuvent être obtenus de façon connue en soi par copulation du dérivé diazoïque de l'amino-5(3) phényl-3(5) pyrazole ou de l'amino-5(3) nitro-4 phényl-3(5) pyrazole avec un composé de formule:

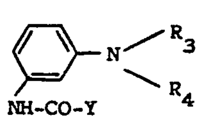
(III)

dans laquelle $R_3$, $R_4$ et Y ont les mêmes significations que ci-dessus.

La diazotation de l'amino-5(3) phényl-3(5) pyrazole ou de son dérivé nitro-4 est effectuée de manière connuepar action d'un nitrite alcalin en milieu acide minéral et/ou organique.

Les copulants de formule (III) peuvent être obtenus de façon connue en soi par condensation d'une N-alkyl ou N,N-dialkyl métaphénylènediamine avec le chlorure d'acide benzoïque éventuellement substitué par un ou deux atomes d'halogène ou groupes nitro.

Les colorants selon l'invention peuvent être appliqués sur les fibres à base de polymères ou copolymères d'acrylonitrile et sur les fibres à base de polyamides ou polyesters modifiés par des groupes acides, suivant toutes les méthodes connues d'application des colorants basiques. La coloration est conférée par le cation colorant; l'anion de joue aucun rôle tinctorial et peut être échangé contre un autre anion, par exemple pour modifier la solubilité du colorant.

Parmi les colorants de formule (I), se sont révélés particulièrement intéressants ceux de formule:

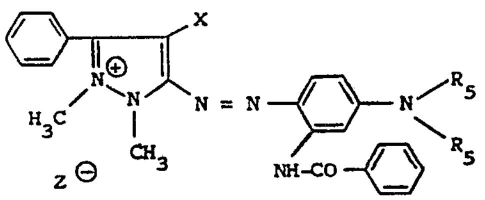

(IV)

dans laquelle X et $Z^{\ominus}$ ont la même signification que ci-dessus et $R_5$ représente un groupe méthyle ou éthyle.

Dans les exemples suivants, donnés à titre non limitatif, les parties indiquées sont en poids.

EXEMPLE 1

On dissout 79,5 parties de phényl-3 amino-5 pyrazole dans 500 parties d'eau acidifiée par 125 parties d'acide acétique glacial. A cette solution refroidie entre 0 et 5°C par addition de 200 parties de glace, on ajoute 220 parties d'acide sulfurique à 96%; la température s'élève à 15°C. On ajoute 150 parties de glace pour refroidir, puis on coule rapidement 37,5 parties de nitrite de sodium en solution dans 37,5 parties d'eau. On maintient la température à 0°C par addition de 150 parties de glace. On brasse pendant 10 minutes, puis on filtre la solution de sel de diazonium obtenue. Après neutralisation de l'excès d'acide nitreux au moyen d'acide sulfamique, la solution du dérivé diazoïque est coulée en une heure dans une solution de 134 parties de N,N-diéthyl N'-benzoyl métaphénylènediamine dans 500 parties d'eau et 90 parties d'acide sulfurique à 96P, tout en maintenant la température à 0°C par addition progressive de 200 parties de glace. On remonte ensuite lentement le pH jusqu'à environ 4 par addition de 350 parties d'ammoniaque à 25 %, puis on filtre le précipité, le lave à l'eau et le sèche. On introduit 25 parties du phényl-3 (benzoylamino-2 diéthylamino-4 phénylazo)-5 pyrazole ainsi obtenu dans 90 parties de sulfate de diméthyle et chauffe à 90°C jusqu'à ce qu'une prise d'essai soit totalement soluble dans l'eau. On laisse refroidir jusqu'à 60°C, puis coule la solution sur 100 parties d'eau, agite pendant une demi-heure à 60°C et laisse refroidir à température ambiante.

Le colorant est précipité par additionde chlorure de sodium et de chlorure de zinc, filtré et séché. On obtient ainsi le chlorozincate de diméthyl-1,2 phényl-3 (benzoylamino-2 diéthylamino-4 phénylazo)-5 pyrazolium sous forme d'une poudre rouge, soluble dans l'eau; il donne une solution rouge vif. Ce colorant teint les fibres à base de plymères ou copolymères d'acrylonitrile en une nuance rouge, franche et vive. Son indice de compatibilité (Ic), déterminé d'après la méthode décrite dans le J.S.D.C. de Février 1971, est de 3,5 etsa stabilité dans les bains de teinture est remarquable.

Le tableau suivant résume d'autres exemples de colorants selon l'invention, préparés comme à l'exemple précédent à partir du même dérivé diazoïque, mais en remplaçant la N,N-diéthyl N'-benzoyl m-phényllènediamine par une quantité équimolaire du copulant indiqué dans la seconde colonne.

TABLEAU A

| Ex. | Copulant de formule (III) | Ic | Nuance |
|---|---|---|---|
| 2 | N,N-diméthyl N'-benzoyl m-phénylènediamine | 3,5 | rouge |
| 3 | N,N-diéthyl N'-(nitro-4 benzoyl) m-phénylènediamine | 2,5 | rouge |
| 4 | N,N-diéthyl N'-(nitro-3 benzoyl) m-phénylènediamine | 3,5 | rouge bleuté |
| 5 | N,N-diéthyl N'-(nitro-2 benzoyl) m-phénylènediamine | 3 | rouge bleuté |
| 6 | N,N-diméthyl N'-(nitro-4 benzoyl) m-phénylènediamine | 2,5 | rouge |
| 7 | N,N-diméthyl N'-(nitro-3 benzoyl) m-phénylènediamine | 3,5 | rouge |
| 8 | N,N-diméthyl N'-(nitro-2 benzoyl) m-phénylènediamine | 3 | rouge |
| 9 | N,N'-diéthyl N'-(chloro-2 benzoyl) m-phénylènediamine | 3 | rouge bleuté |
| 10 | N,N-diméthyl N'-(chloro-2 benzoyl) m-phénylènediamine | 3 | rouge |
| 11 | N,N-diéthyl N'-(chloro-4 benzoyl) m-phénylènediamine | 2,5 | rouge bleuté |
| 12 | N,N-diméthyl N'-(chloro-4 benzoyl) m-phénylènediamine | 3 | rouge |
| 13 | N,N-diéthyl N'-(dichloro-2,4 benzoyl) m-phénylènediamine | 3,5 | rouge |
| 14 | N,N-diméthyl N'-(dichloro-2,4 benzoyl) m-phénylènediamine | 3,5 | rouge |

## EXEMPLE 15

En remplaçant dans l'exemple 1 le phényl-3 amino-5 pyrazole par une quantité équivalente de phényl-3(5) nitro-4 amino-5 (3) pyrazole, on obtient le chlorozincate de diméthyl-1,2 phényl-3 nitro-4 (benzoylamino-2 diéthylamino-4 phénylazo)-5 pyrazolium. Ce colorant teint les fibres à base de polymères ou copolymères d'acrylonitrile en une nuance rouge bleutée; son indice de compatibilité est de trois et sa stabilité dans les bains de teinture est remarquable.

Le tableau suivant résume d'autres exemples de colorants selon l'invention, préparés comme à l'exemple précédent à partir du même dérivé diazoïque, mais en remplaçant la N,N-diéthyl N'-benzoyl m-phénylènediamine par une quantité équimolaire du copulant indiqué dans la seconde colonne.

TABLEAU B

| Ex. | Copulant de formule (III) | Nuance |
|---|---|---|
| 16 | N,N-diméthyl N'-benzoyl m-phénylènediamine | rouge bleuté |
| 17 | N,N-diéthyl N'-(nitro-4 benzoyl) m-phénylènediamine | ,, |
| 18 | N,N-diéthyl N'-(nitro-3 benzoyl) m-phénylènediamine | ,, |
| 19 | N,N-diéthyl N'-(nitro-2 benzoyl) m-phénylènediamine | ,, |
| 20 | N,N-diméthyl N'-(nitro-4 benzoyl) m-phénylènediamine | ,, |
| 21 | N,N-diméthyl N'-(nitro-3 benzoyl) m-phénylènediamine | ,, |
| 22 | N,N-diméthyl N'-(nitro-2 benzoyl) m-phénylènediamine | ,, |
| 23 | N,N-diéthyl N'-(chloro-2 benzoyl) m-phénylènediamine | ,, |
| 24 | N,N-diméthyl N'-(chloro-2 benzoyl) m-phénylènediamine | ,, |
| 25 | N,N-diéthyl N'-(chloro-4 benzoyl m-phénylènediamine | ,, |
| 26 | N,N-diméthyl N'-(chloro-4 benzoyl) m-phénylènediamine | ,, |
| 27 | N,N-diéthyl N'-(dichloro-2,4 benzoyl) m-phénylènediamine | ,, |
| 28 | N,N-diméthyl N'-(dichloro-2,4 benzoyl) m-phénylènediamine | rouge |

**Revendications**

1. Les colorants de formule générale:

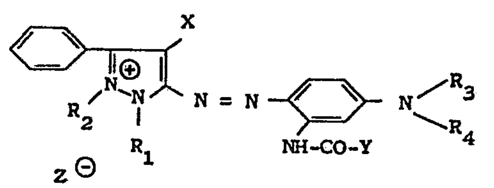

(I)

dans laquelle $R_1$ et $R_2$ représentent des groupes alkyle contenant 1 à 4 atomes de carbone, $R_3$ représente un atome d'hydrogène ou un groupe méthyle ou éthyle, $R_4$ représente un groupe méthyle ou éthyle, X représente un atome d'hydrogène ou un groupe nitro, Y représente un groupe phényle éventuellement substitüé par un ou deux atomes d'halogène ou groupes nitro, et $Z^{\ominus}$ représente un anion.

2. Colorants selon la revendication 1 dans lesquels $R_1$ et $R_2$ sont des groupes méthyle ou éthyle.

3. Colorants selon la revendication 1 ou 2 dans lesquels Y est un groupe phényle, nitrophényle, chlorophényle ou dichlorophényle.

4. Procédé pour la préparation des colorants selon la revendication 1 qui consiste à traiter par un agent alkylant un composé de formule:

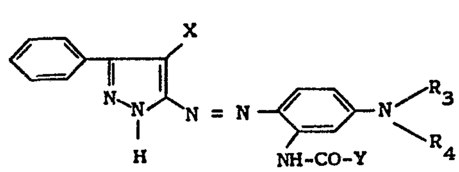

(II)

dans laquelle X, Y, $R_3$ et $R_4$ ont les mêmes significations que dans la revendication 1.

5. L'application des colorants selon l'une des revendications 1 à 3 à la coloration des fibres à base de polymères ou copolymères d'acrylonitrile et des fibres à base de polyamides ou polyesters modifiés par des groupes acides.

6. Les fibres à base de polymères ou copolymères d'acrylonitrile ou à base de polyamides ou polyesters modifiés par des groupes acides, teintes ou imprimées au moyen d'un colorant selon l'une des revendications 1 à 3.

**Claims**

1. Dyestuffs of the general formula:

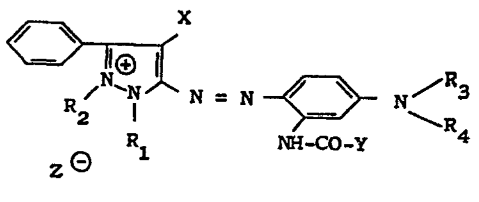
(I)

in which $R_1$ and $R_2$ represent alkyl groups containing 1 to 4 carbon atoms, $R_3$ represents a hydrogen atom or a methyl or ethyl group, $R_4$ represents a methyl or ethyl group, X represents a hydrogen atom or a nitro group, Y represents a phenyl group possibly substituted by one or two halogen atoms or nitro groups, and $Z^{\ominus}$ represents an anion.

2. Dyestuffs according to claim 1 in which $R_1$ and $R_2$ are methyl or ethyl groups.

3. Dyestuffs according to claim 1 or 2 in which Y is a phenyl, nitrophenyl, chlorophenyl or dichlorophenyl group.

4. Process for the preparation of the dyestuffs according to claim 1 which comprises treating with an alkylating agent a compound of the formula:

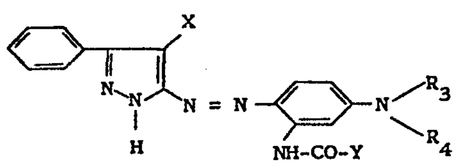
(II)

in which X, Y, $R_3$ and $R_4$ have the same meanings as in claim 1.

5. The use of the dyestuffs according to any of claims 1 to 3 for colouring fibres based on polymers or copolymers of acrylonitrile and fibres based on polyamides or polyesters modified by acid groups.

6. Fibres based on polymers or copolymers of acrylonitrile or based on polyamides or polyesters modified by acid groups, when dyed or printed by means of a dyestuff according to any claims 1 to 3.

**Patentansprüche**

1. Farbstoffe der allgemeinen Formel:

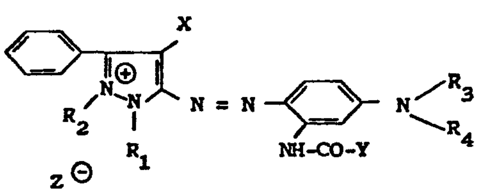
(I)

in der $R_1$ und $R_2$ Alkylgruppenmit 1 bis 4 Kohlenstoffatomen, $R_3$ ein Wasserstoffatom oder eine Methyl- oder Äthylgruppe, $R_4$ eine Methyl- oder Äthylgruppe, X ein Wasserstoffatom oder eine Nitrogruppe, Y eine gegebenenfalls durch eins oder zwei Halogenatome oder Nitrogruppen substituierte Phenylgruppe, und $Z^{\ominus}$ ein Anion bedeuten.

2. Farbstoffe nach Anspruch 1, worin $R_1$ und $R_2$ Methyl- oder Äthylgruppen sind.

3. Farbstoffe nach Anspruch 1 oder 2, worin Y eine Phenyl-, Nitrophenyl-, Chlorophenyl- oder Dichlorophenylgruppe ist.

4. Verfahren zur Herstellung der Farbstoffe nach Anspruch 1, welches darin besteht, daß man eine Verbindung der Formel:

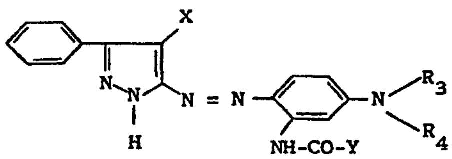

(II)

worin X, Y, $R_3$ und $R_4$ die gleichen Bedeutungen als im Anspruch 1 besitzen, mit einem Alkylierungsmittel umsetzt.

5. Verwendung der Farbstoffe nach einem der Ansprüche 1 bis 3 zur Färbung von Fasern auf der Basis von Acrylnitril- Polymeren oder Copolymeren und von Fasern auf der Basis von durch Säuregruppen modifizierten Polyamiden oder Polyestern.

6. Fasern auf der Basis von Acrylnitril- Polymeren oder Copolymeren oder auf der Basis von durch Säuregruppen modifizierten Polyamiden oder Polyestern, sofern sie mit Hilfe eines Farbstoffs nach einem der Ansprüche 1 bis 3 gefärbt oder bedruckt sind.